# EUROPÄISCHE PATENTSCHRIFT

(11) **EP 4 009 013 B1**
(45) Veröffentlichungstag und Bekanntmachung des Hinweises auf die Patenterteilung: **16.04.2025**
(21) Anmeldenummer: 20212019.2
(22) Anmeldetag: 04.12.2020
(51) Int. Cl.: G01G 21/24, G01G 7/04, G01G 23/00

(54) **STRUKTURKÖRPER EINES WÄGESENSORS**
STRUCTURAL BODY OF A SCALE SENSOR
CORPS STRUCTURAL D'UN CAPTEUR DE PESAGE

(43) Veröffentlichungstag der Anmeldung: 08.06.2022
(73) Patentinhaber: Mettler-Toledo GmbH, 8606 Greifensee (CH)
(72) Erfinder: BURKHARD, Hans-Rudolf, 8492 Wila (CH); LÜCHINGER, Bruno, 9230 Flawil (CH); METZGER, Andreas, 8708 Männedorf (CH)
(74) Vertreter: Leinweber & Zimmermann

(56) Entgegenhaltungen:
- DE-A1- 102019 113 001

## Beschreibung

Die Erfindung betrifft einen Strukturkörper eines Wägesensors mit Roberval-Mechanismus, insbesondere für einen Wägesensor nach dem elektromagnetischen Kraftkompensationsprinzip, sowie ein Verfahren zu dessen Herstellung.

Insbesondere betrifft die Erfindung einen Strukturkörper eines Wägesensors mit Roberval-Mechanismus gemäß dem unabhängigen Anspruch 1.

Derartige Strukturkörper von Wägesensoren sind im Stand der Technik gut bekannt, und es besteht eine Tendenz im Stand der Technik, die Strukturkörper möglichst kompakt zu gestalten, damit sie in einer den Wägesensor benutzenden Wägeeinrichtung einen möglichst geringen Platzbedarf verursachen, und somit insbesondere für Applikationen geeignet sind, bei denen die Wägeeinrichtung eine Mehrzahl solcher Wägesensoren aufweist. Zudem versteht es sich, dass die Wägesensoren auch eine möglichst hohe Wägegenauigkeit haben sollen.

Hinsichtlich dieser Anforderungen haben sich im Stand der Technik Strukturkörper in Form eines sogenannten Monoblocks entwickelt und sich in dieser Form im Wesentlichen durchgesetzt, wie sie z.B. in der DE 196 05 087 A1 oder EP 2 397 824 A1 offenbart sind. Derartige Strukturkörper werden hergestellt, indem von einem quaderförmigen Materialblock von z.B. relativen Abmessungen in etwa der Form einer VHS-Videokassette ausgegangen wird, dessen lange Seite der Längsrichtung entspricht, zu der die Parallelität der Lenker des Roberval-Mechanismus vorliegt, deren zweitlängste Seite in Lastrichtung verläuft, so dass die beiden bezüglich der Längsrichtung Endbereiche einerseits zum feststehenden und andererseits zum beweglichen Schenkel des Roberval-Mechanismus zählen. Durch materialabtragende Bearbeitung dieses Monoblocks in Form von Perforierungen oder Schnittlinienbildungen durch Durchstoßen des Blocks in Querrichtung wird dem Monoblock eine Struktur derart verliehen, dass oben und unten die Lenker definiert werden und der von den Schenkeln und diesen oben und unten verlaufenden Lenkern des Roberval-Mechanismus eingeschlossene Innenbereich in unterschiedliche funktionale Bereiche unterteilt wird, nämlich zum einen zum feststehenden Schenkel gehörige Bereiche und zum anderen eine Hebelanordnung mit üblicherweise einem, zwei oder drei Hebeln ausgebildet werden, die über entsprechende Lagerungen am feststehenden Schenkel gelagert sind und mit dem beweglichen Schenkel bzw. ggf. zwischen den Hebeln durch sogenannte Koppeln verbunden sind. Die Trennung zwischen den Hebeln und dem zum feststehenden Schenkel zählenden Material liegt dabei in im Wesentlichen nur dünnen Trennlinien (deren Vorteile z.B. in DE 41 19 734 A1 beschrieben sind), da aufgrund des Messprinzips nach der elektromagnetischen Kraftkompensation eine signifikante, die Abmessung der Trennlinie überschreitende Bewegung der Hebel ohnehin nicht auftritt. Der im Kraftübertragungsweg letzte Hebel weist typischerweise zwei Querbohrungen auf, über welche ein Hebelfortsatz anmontiert ist, an dessen freiem Endbereich dann die für dieses Wägeprinzip erforderliche Ankopplung an die elektromagnetische Kraftkompensation sowie den Positionssensor vorgesehen ist, wie dem Fachmann gut bekannt ist.

Die Technik dieser minimalen Materialabtragung durch Querperforieren beispielsweise durch Drahterodieren ist mittlerweile so ausgereift, dass selbst die Einarbeitung eines Sub-Roberval-Mechanismus zur Einkopplung der Gewichtslast eines internen Referenzgewichts mit in den Monoblock eingearbeitet werden kann, auch mit Materialschwächungen in Querrichtung wie z.B. in EP 2 397 824 A1 offenbart ist.

Weiterer Stand der Technik ist durch die Patentschrift DE 10 2019 113001 A1 gegeben.

Der Erfindung liegt die Aufgabe zugrunde, einen Strukturkörper der eingangs genannten Art nochmals in Richtung auf eine zufriedenstellende Kombination aus möglichst geringem Bauraum und möglichst hoher Wägegenauigkeit weiterzubilden.

Diese Aufgabe wird von der Erfindung in vorrichtungstechnischer Hinsicht gelöst durch eine Weiterbildung des Strukturkörpers der eingangs genannten Art, die im Wesentlichen dadurch gekennzeichnet ist, dass wenigstens eines von dem ersten bis fünften Teil einen Bereich von der Topologie eines Henkelkörpers von wenigstens Geschlecht Eins aufweist, dessen wenigstens ein Loch von wenigstens einem mit diesem Bereich einstückig verbundenen Abschnitt eines anderen von dem ersten bis sechsten Teil durchdrungen ist.

Aufgrund der erfindungsgemäßen Weiterbildung kann wenigstens ein Bereich des von dem Strukturkörper eingenommenen Bauraums, der herkömmlich nur für genau ein funktionales Teil des Strukturkörpers genutzt ist, nun von wenigstens zwei verschiedenen funktionalen Teilen genutzt werden, oder unter Materialeinsparung eine gleichwertige Stützstruktur mit unterschiedlichen Erstreckungsrichtungen geschaffen werden. So wird durch Gestaltung des Bereichs in der Topologie eines Henkelkörpers der durch das Loch des Henkelkörpers gebildete Raum z.B. genutzt, um anderen funktionalen Teilen gezielten Zugang zu einem Raumbereich zu verschaffen, der für einen optimierten Weg für den Fluss der eingeleiteten Kraft als wünschenswert erachtet wird. Beispielsweise kann der Lastaufnehmer des beweglichen Schenkels variabler positioniert und dennoch in günstiger Weise abgestützt werden, indem Stützstreben durch Bereiche des feststehenden Schenkels geführt werden, welche in der Topologie eines Henkelkörpers gebildet sind. Es können auch Abschnitte des oberen Lenkers beispielsweise durch Bereiche des beweglichen Schenkels geführt werden, was ebenfalls eine höhere Flexibilität in der Positionierung des Lastaufnehmers mit sich bringt, bzw. eine zuverlässigere Abstützung und einen verbesserten Kraftführungsweg des Strukturkörpers ermöglicht. Der letzte Hebel der Hebelanordnung kann beispielsweise durch einen bislang unzugänglichen Bereich des feststehenden Schenkels geführt werden, so dass eine Vereinfachung der Hebelanordnung bis hin zur Ankopplung an die elektromagnetische Kraftkompensation erreichbar ist.

Durch die Gestaltung von Bereichen der funktionalen Teile in Topologie eines Henkelkörpers insbesondere auch von Geschlecht Zwei oder mehr gelingt zudem eine Gesamtgewichtsverringerung bei gleichbleibender Steifigkeit und einer dadurch geringeren Dimensionierung des Strukturkörpers, so dass auch, bezogen auf gleiches Gewicht des Strukturkörpers eine höhere Kompaktheit und/oder geringerer Materialbedarf erreicht wird. So können beispielsweise insbesondere Bereiche des feststehenden Schenkels in einer aus einer Vielzahl von Streben bestehenden Struktur aus einer Mehrzahl von Längsstreben in überwiegend in Längsrichtung verlaufender Erstreckung, einer Mehrzahl von Vertikalstreben in einer überwiegend in Lastrichtung verlaufender Anzahl und einer Mehrzahl von Querstreben in einer überwiegend in Querrichtung verlaufender Erstreckung anstelle von massiv ausgebildeten Bereichen gebildet werden. Aufgrund der einstückigen Verbindung zwischen dem Bereich von der Topologie eines Henkelkörpers und dem diesen durchdringenden Abschnitt z.B. eines anderen funktionalen Teils wird aufgrund der Einstückigkeit der Verbindung zudem sichergestellt, dass kein zusätzlicher Platzbedarf für mechanische Verbindungen bzw. Adapter zum Verknüpfen zweier nicht einstückig verbundener Bereiche erforderlich sind; diesbezüglich hat die Erfindung weiterhin Vorteile der oben erläuterten Monoblock-Technologie.

Ein Beispiel für die Topologie eines Henkelkörper von Geschlecht Eins ist bekanntlich ein Torus (Doughnut), wobei es aufgrund der topologischen Eigenschaft des Henkelkörpers auf die Formgebung der Berandung des "Lochs" (oder der mehreren Löcher) nicht ankommt, beispielsweise stellt auch ein geschlossener Rahmen, ein Beispiel für einen Henkelkörper von wenigstens Geschlecht Eins dar. In einer bevorzugten Variante wird die Topologie des Henkelkörpers eines oder mehrerer der funktionalen Teile durch eine rahmenartige Anordnung dreier oder mehrerer Streben erreicht.

Die Bauart aus einer großen Anzahl einzelner einstückig miteinander verbundenen Streben wird von der Erfindung auch unabhängig von etwaigen gegenseitigen Durchdringungen als eigenständig vorteilhaft offenbart. So stellt die Erfindung ebenfalls bereit einen Strukturkörper gemäß dem Oberbegriff von Anspruch 1, der wenigstens 12, auch 16, insbesondere 24 Längsstreben, wenigstens 4, auch 2 Vertikalstreben und wenigstens 4, auch 8 Querstreben wie vorstehend definiert aufweist. Wenigstens 8, insbesondere wenigstens 16 davon können bevorzugt als Diagonalstreben vorgesehen sein, also mit einer im Vergleich zu der Ausdehnung in beiden anderen Richtungen größenordnungsmäßig kleineren Ausdehnung in eine Richtung.

In einer möglichen Ausführungsform können funktionale Teile auch gegenseitig untereinander verschlungen sein, so kann der durchdringende Abschnitt Bestandteil eines mit dem durchdrungenen Bereich verschlungenen Bereich von ebenfalls der Topologie eines Henkelkörpers von wenigstens Geschlecht Eins sein. Auf diese Weise wird eine gute Nutzung des verfügbaren Bauraums unter zufriedenstellender Steifigkeit der jeweiligen funktionalen Teilbereiche ermöglicht. Ebenfalls vorgesehen werden kann eine Konfiguration, in der ein Loch eines solchen Bereichs eines funktionalen Teils von einem durchdringenden Abschnitt des gleichen funktionalen Teils durchdrungen ist. Zudem ist auch an Gestaltungen gedacht, in denen Bestandteile zweier unterschiedlicher funktionaler Teile gemeinsam einen Bereich von der Topologie eines Henkelkörpers von wenigstens Geschlecht Eins bilden, der von einem durchdringenden Abschnitt eines dieser funktionalen Teile oder eines nochmals anderen funktionalen Teils durchdrungen ist. Beispielsweise könnte ein Abschnitt des beweglichen Schenkels eine durch den oberen Lenker und den feststehenden Schenkel gebildete Rahmenstruktur durchdringen.

In einer weiteren möglichen Ausführungsform kann das Geschlecht des Henkelkörpers des durchdrungenen Bereichs zwei oder mehr sein, und wenigstens ein weiteres Loch von dem anderen Teil und/oder einem nochmals anderen mit dem durchdrungenen Bereich einstückig verbundenen Teil des ersten bis sechsten Teils durchdrungen sein. Es wird auch daran gedacht, dass ein Loch des Henkelkörpers von jeweils einem Abschnitt eines unterschiedlichen Teils durchdrungen wird.

Ebenfalls kann vorgesehen sein, dass neben dem einen Teil wenigstens ein weiteres Teil von dem ersten bis fünften Teil einen Bereich von der Topologie eines Henkelkörpers von wenigstens Geschlecht Eins aufweist, dessen wenigstens ein Loch von wenigstens einem einstückig mit diesem Bereich des weiteren Teils verbundenen (und gegenüber diesem weiteren Teil) anderen von dem ersten bis sechsten Teil durchdrungen ist. Auch diesbezüglich können mehrfache Durchdringungen vorgesehen sein, und die oben erläuterte gemeinsame anteilweise Nutzung eines lokalen Raumbereichs mehrfach an unterschiedlichen Orten realisiert sein.

Es ist durchaus auch an Varianten gedacht, bei denen einige funktionale Teile durchdrungene Bereiche aufweisen und andere nicht. Bevorzugt weist der erste Teil einen solchen durchdrungenen Bereich der Topologie eines Henkelkörpers von wenigstens Geschlecht Eins auf. Weiter bevorzugt weist der fünfte Teil einen solchen durchdrungenen Bereich von der Topologie eines Henkelkörpers von wenigstens Geschlecht Eins auf. In einer weiteren bevorzugten Ausgestaltung weist auch der zweite Teil einen solchen durchdrungenen Bereich von der Topologie eines Henkelkörpers von wenigstens Geschlecht Eins auf. Ebenfalls kann bevorzugt vorgesehen sein, dass auch der dritte Teil einen durchdrungenen Bereich von der Topologie eines Henkelkörpers von wenigstens Geschlecht Eins aufweist.

Weiter kann vorgesehen sein, dass eines oder mehrere der ersten bis fünften Teile einen Bereich von der Topologie eines Henkelkörpers von Geschlecht deutlich höher als Eins aufweisen, deren Löcher teilweise oder sogar überwiegend nicht durchdrungen sind. So weist bevorzugt der erste Teil einen Bereich von der Topologie eines Henkelkörpers von wenigstens Geschlecht Zwei, weiter bevorzugt wenigstens Geschlecht Vier, insbesondere wenigstens Geschlecht Acht auf, er könnte jedoch auch die Topologie eines Henkelkörpers von wenigstens Geschlecht Zwölf, Sechzehn, sogar wenigstens Geschlecht Vierundzwanzig aufweisen. Der zweite Teil weist bevorzugt einen Bereich von der Topologie eines Henkelkörpers von wenigstens Geschlecht Zwei, bevorzugt wenigstens Geschlecht Vier, insbesondere wenigstens Geschlecht Acht auf. Das dritte und/oder das vierte Teil weisen bevorzugt einen Bereich von der Topologie eines Henkelkörpers mit Geschlecht wenigstens Zwei, insbesondere wenigstens Vier auf.

In einer weiteren bevorzugten Ausgestaltung weist die Hebelanordnung (das fünfte Teil) einen Abschnitt auf, der sich in Längsrichtung des Strukturkörpers gesehen in Richtung von dem beweglichen Schenkel über die dem feststehenden Schenkel zugeordneten Biegestellen hinaus erstreckt und dabei in Querrichtung gesehen zwischen den in Querrichtung äußeren Enden dieser Biegestellen verläuft, insbesondere als durchdringender Abschnitt. In einer alternativen Ausgestaltung kann jedoch auch vorgesehen sein, dass die Hebelanordnung sich in Längsrichtung nicht über diese Biegestellen erstreckt, und insbesondere eine Abtastung einschließlich einer Magnet-Spule-Anordnung zwischen den Biegestellen von beweglichem und feststehenden Schenkel sitzt.

Wie bei Roberval-Mechanismen üblich, sind zwischen dem feststehenden Schenkel und dem oberen Lenker, dem feststehenden Schenkel und dem unteren Lenker, dem beweglichen Schenkel und dem oberen Lenker sowie dem beweglichen Schenkel und dem unteren Lenker Biegestellen (Dünnbiegestellen) vorgesehen. In einer bevorzugten Gestaltung erstrecken sich die Biegestellen nicht kontinuierlich von einem in Querrichtung gesehen Ende zum anderen, sondern diskontinuierlich. In einer besonders bevorzugten Gestaltung sind eine, mehrere oder alle Biegestellen in wenigstens zwei, insbesondere genau zwei separate Querabschnitte unterteilt. Auf diese Weise wird eine zufriedenstellende Versteifung insbesondere auch in Lastrichtung erreicht.

Eine weitere bevorzugte Ausgestaltung weist einen Strukturkörper auf, bei dem in Projektion auf eine Ebene orthogonal zur Lastrichtung gesehen ein in Längsrichtung gesehen insbesondere überwiegender Abschnitt der Hebelanordnung zwischen Materialbereichen des ersten Teils liegt, insbesondere mit in dieser Ebene bemessenen Verhältnis aus Querausdehnung des Hebelanordnungsabschnitts zur Querausdehnung des ersten Teils von weniger als 0,9, bevorzugt weniger als 0,8, insbesondere weniger als 0,7 über einen Längsabschnitt von wenigstens 40%, bevorzugt wenigstens 60%, insbesondere wenigstens 80%, sogar wenigstens 90% der Längsausdehnung der Lenker. Absolute Abmessungen der neben der Dicke der Biegestellen die Rückstellkraft der Parallelogrammanordnung beinflussenden Längsausdehnung der Lenker werden abhängig von der Normlast der Wägezelle bestimmt, für die der Strukturkörper eingesetzt werden soll.

In einer weiteren bevorzugten Gestaltung wird in Projektion auf eine Ebene orthogonal zur Querrichtung gesehen ein Bereich der Hebelanordnung insbesondere mehrfach von Abschnitten des feststehenden Schenkels gekreuzt, insbesondere ein durchdrungener Bereich und/oder von einem durchdringenden Abschnitt. Durch eine Ausdehnung des feststehenden Schenkels in Querrichtung gesehen über Bereiche der Hebelanordnung hinaus, jedenfalls bereichsweise, kann eine erhöhte Steifigkeit trotz Aufgabe einer Massivstruktur zugunsten einstückig miteinander verbundener Streben erreicht werden.

In einer weiteren bevorzugten Gestaltung wird eine Lagerung der Hebelanordnung durch wenigstens zwei Streben des ersten Teils mit unterschiedlicher Winkelanstellung zur Ebene orthogonal zur Lastrichtung abgestützt. Dies erlaubt eine zufriedenstellende Steifigkeit in der starren Verbindung der kraftaufnehmenden Hebelauflage. Ähnliche Abstützungen können für Bereiche des ersten Teils vorgesehen sein, in denen eine Montageankopplung des feststehenden Schenkels angeordnet ist, etwa eine Montagebohrung.

Erfindungsgemäß ist vorgesehen, dass ein die aufzunehmende Gewichtslast aufnehmender Kraftaufnehmer des zweiten Teils in einem in Längsrichtung gesehen zwischen den einerseits dem beweglichen Schenkel und andererseits dem feststehenden Schenkel zugeordneten Biegestellen angeordnet ist, und insbesondere durch wenigstens zwei Streben des zweiten Teils mit unterschiedlicher Winkelanstellung zur Ebene orthogonal zur Lastrichtung abgestützt ist, wobei Streben Bestandteile eines durchdringenden Abschnitts und durchdrungenen Bereichs sind.

Durch den auf diese Weise mehr zentral angeordneten Lastaufnehmer kann eine für diverse Anwendungszwecke günstige Anordnung des Strukturkörpers in einer Wägevorrichtung bezüglich deren z.B. Lastschale erreicht werden, die mit dem Lastaufnehmer zu verbinden ist. Insbesondere kann vorgesehen sein, dass eine Verbindung des Lastaufnehmers zu einem Stützrahmen des beweglichen Schenkels oberhalb des oberen Lenkers verläuft. Hinsichtlich des beweglichen Schenkels ist ebenfalls vorgesehen, dass eine Auflage für ein Referenzgewicht, etwa ein wägesensorinternes Referenzgewicht vorgesehen ist. Insbesondere ist bevorzugt vorgesehen, dass die über den Kraftaufnehmer eingeleitete Last wie auch die über die Auflage für das Referenzgewicht eingeleitete Last über dieselbe Koppel in die Hebelanordnung eingeleitet wird. Eine das Referenzgewicht im Nichtgebrauch haltende Halteeinheit könnte sich dabei am feststehenden Schenkel abstützen, beispielsweise über einen Befestigungsmechanismus, insbesondere an Montagebohrungen angekoppelt, die z.B. an Auslegern des feststehenden Schenkels vorgesehen ist.

Die oben bereits angesprochenen Biegestellen, welche in Querrichtung gesehen voneinander beabstandete Querabschnitte aufweisen können, definieren durch ihr jeweils in Querrichtung äußeres Ende Eckbereiche im Raum, die bzw. deren konvexe Hülle einen Raumbereich eines definierten Volumens einschließen (die konvexe Hülle wird gebildet, indem diese äußeren Enden der jeweils oberen und unteren Biegestellen jeweils untereinander und seitenrichtig zugeordnet miteinander verbunden werden). In einer besonders bevorzugten Ausgestaltung ist vorgesehen, dass das Produkt dieses Volumens mit der Dichte des Materials des Strukturkörpers um einen Faktor von wenigstens 1,2, bevorzugt wenigstens 1,4, insbesondere wenigstens 1,75 größer ist als die Masse des in diesem Volumen befindlichen Material des Strukturkörpers. Dieser Faktor kann auch zwei oder mehr, insbesondere 2,5 oder mehr sein.

Dieser Aspekt wird von der Erfindung auch als eigenständig vorteilhaft und unabhängig von etwaigen Durchdringungen der funktionalen Teile eigenständig offenbart. Die Erfindung stellt somit ebenfalls bereit einen Strukturkörper mit den Merkmalen des Oberbegriffs von Anspruch 1, bei dem die konvexe Hülle der in Querrichtung äußeren Enden der Biegestellen ein Volumen umfasst, dessen Produkt mit der Dichte des Materials des Strukturkörpers um einen Faktor von wenigstens 1,2, bevorzugt wenigstens 1,4, insbesondere wenigstens 1,75 größer ist als die Masse des in diesem Volumen befindlichen Material des Strukturkörpers. Dieser Faktor kann auch zwei oder mehr, insbesondere 2,5 oder mehr sein. Aufgrund der damit einhergehenden Materialverteilung werden bezogen auf das eingesetzte Gesamtmaterial bezüglich einzelner Belastungsrichtungen höhere Flächenträgheitsmomente und daher höhere Biegemomente erreicht und somit materialsparend eine zufriedenstellende Steifigkeit der funktionalen Bestandteile der Strukturvorrichtung erreicht.

In einer bevorzugten Ausgestaltung ist die maximale Ausdehnung des beweglichen Schenkels in Querrichtung um wenigstens einen Faktor 1,125, bevorzugt wenigstens 1,25, insbesondere wenigstens 1,5 geringer als die des feststehenden Schenkels. Alternativ oder zusätzlich verjüngt sich die Querausdehnung der Lenker in Richtung auf den beweglichen Schenkel hin mit Neigung von 6% oder mehr, bevorzugt 12% oder mehr, insbesondere 18% oder mehr. Diese Variante eignet sich insbesondere für Anwendungen geringerer Lasten. Insbesondere bei grösseren Lasten wird jedoch bevorzugt, dass die maximale Ausdehnung des beweglichen Schenkels in Querrichtung um höchstens einen Faktor 1,33, bevorzugt höchstens 1,25, insbesondere höchstens 1,125 geringer als die des feststehenden Schenkels, auch grösser sein darf als der feststehen Schenkel, jedoch bevorzugt nicht um mehr grösser als die zuletzt genannten Faktoren. Bei dieser Variante wird dem Diagonalzug der Lenker mehr relative Wichtigkeit verliehen als der Masse des beweglichen Schenkels. Alternativ oder zusätzlich kann sich die Querausdehnung der Lenker in Richtung auf den beweglichen Schenkel hin mit Neigung von 6% oder mehr, bevorzugt 12% oder mehr, insbesondere 18% oder mehr verjüngen, bzw. gleichmässig verlaufen oder mit Neigung von nicht mehr als 18%, bevorzugt als 12%, insbesondere als 6% oder mehr verjüngen und/oder erweitern. In diesem Zusammenhang stellt die Erfindung auch bereit einen Satz aus zwei oder mehr, bevorzugt 3 oder mehr Strukturkörpern gemäß Anspruch 1 mit unterschiedlicher Querausdehnung des beweglichen Schenkels.

In einer u.a.mit Blick auf Einbauräume möglichen Ausgestaltung kann vorgesehen werden, dass der Abstand des oberen Lenkers von dem unteren Lenker in Lastrichtung geringer ist als die Querausdehnung der Biegestellen zwischen oberem Lenker und feststehendem Schenkel insbesondere um Faktor von mehr als 1,2, bevorzugt mehr als 1,4, insbesondere mehr als 1,6 kleiner. Es ist jedoch ebenfalls an Varianten gedacht, in denen dieser Abstand gleich oder grösser ist als die Querausdehnung der Biegestellen zwischen oberem Lenker und feststehendem Schenkel und/oder beweglichem Schenkel, insbesondere um Faktor von mehr als 1,1, auch mehr als 1,2, sogar mehr als 1,3 grösser.

In einer besonders bevorzugten Ausgestaltung sind mehrere, insbesondere alle vom ersten bis sechsten Teil einstückig miteinander verbunden, wobei die Bauteile selbst wie deren Verbindung bevorzugt im additiven Verfahren hergestellt werden.

Demgemäß betrifft die Erfindung auch die Herstellung eines Strukturkörpers nach einem der vorgenannten Aspekte im additiven Verfahren wie einem 3D-Druckverfahren. Die konkrete Formtechnik ist nicht auf bestimmte diesbezüglich per se bekannte Techniken eingeschränkt, beispielsweise können Strang-Ablegeverfahren, Pulverbett-Verfahren, ADAM-Verfahren, LCM-Verfahren, auch modifizierte Pulverbett-Verfahren (Hypoid mit zwischengeschalteter Fräsbearbeitung) herangezogen werden. Es wird auch daran gedacht, unterschiedliche Materialien zum Einsatz zu bringen, etwa für die Biegestellen, indem z.B. ein anderes Pulver im Pulverbettverfahren an vordefinierten Stellen aufgebracht wird.

Auch diese Herstellungsart wird von der Erfindung als vorteilhaft selbst für Gestaltungen gemäß dem Oberbegriff von Anspruch 1 angesehen, bei denen die einzelnen funktionalen Teile nicht von anderen funktionalen Teilen im Sinne des Durchdringens des Loches eines Bereichs von der Topologie eines Henkelkörpers durchdrungen ist, und offenbart somit unabhängig und eigenständig die Herstellung eines Strukturkörpers gemäß dem Oberbegriff von Anspruch 1 im additiven Verfahren (3D-Druck) sowie einen so hergestellten Strukturkörper eines Wägesensors.

In einer besonders bevorzugten Verfahrensgestaltung werden die Biegestellen des Roberval-Mechanismus im Anschluss an das additive Verfahren in einem materialabnehmenden Bearbeitungsschritt nachbearbeitet und dabei in ihre endgültige Form gebracht. Zusätzlich oder alternativ können bei dem additiven Verfahren temporäre Verbindungsstreben geschaffen werden, die später wieder materialabnehmend entfernt werden und demnach kein Bestandteil des fertiggestellten Strukturkörpers sind. Letzteres kann insbesondere nach dem Nachbearbeitungsschritt für die Biegestellen erfolgen.

Bei Auslegung der Gestaltung können einzelne Fixpunkte wie etwa Lager für die Hebel, Biegestellen, Befestigungspunkte des feststehenden Schenkels in einem Schritt definiert werden, in einem weiteren Schritt Kraftflusswege zwischen einzelnen Fixpunkten bestimmt und Variationen selbiger miteinander verglichen werden, und im Falle eines zu einer gewünschten Kraftflussweganordnung auftretenden Kreuzens zweier Kraftflusswege oder Trägerstrukturen einzelner funktionaler Bestandteile eine Gestaltung von der Topologie eines Henkelkörpers für einen Bereich gewählt werden, dessen Loch im Kreuzungsbereich von einem anderen des ersten bis sechsten Teils durchdrungen wird, um einen Bauraumbereich gegenüber einer Bauraumbelegung durch ein funktionales Teil alleine dem anderen funktionalen Teil zugänglich zu machen. Auf diese Weise gelingt bei einem vergleichsweise immer noch kleinen Bauraum die Realisierung einer bionischen Struktur mit günstiger Kraftleitung in der Struktur.

Im Übrigen betrifft die Erfindung auch einen Wägesensor, bevorzugt nach dem Prinzip der elektromagnetischen Kraftkompensation, der einen nach einem der vorgenannten Aspekte ausgebildeten Strukturkörper aufweist. Als Anbauteile, die insbesondere an vorgesehenen Anbaustellen des Strukturkörpers anbaubar sind, wird an ein Kalibriergewicht, einen Kalibrieranhub, ein Magnetsystem, eine Spule, eine Abtastung sowie eine elektronische Schaltung gedacht. Ebenfalls von der Erfindung umfasst sind Wägevorrichtungen mit einem oder mehreren derartigen Wägesensoren. Das Prinzip der elektromagnetischen Kraftkompensation ist dem Fachmann wohlvertraut und es wird daher hier nicht weitergehend beschrieben, sondern diesbezüglich auf z.B. EP 1 726 926 B1, insbesondere [0008], Bezug genommen.

Weitere Merkmale, Einzelheiten und Vorteile der Erfindung ergeben sich aus der nachfolgenden Beschreibung mit Bezug auf die beigefügten Figuren, von denen
- Fig. 1: eine perspektivische Ansicht eines Strukturkörpers für einen Wägesensor zeigt,
- Fig. 2: eine weitere perspektivische Ansicht aus einem anderen Blickwinkel zeigt,
- Fig. 3: den Strukturkörper in einer Seitenansicht zeigt,
- Fig. 4: den Strukturkörper in einer Draufsicht in Lastrichtung zeigt,
- Fig. 5: den Strukturkörper in einer Draufsicht von hinten (in Längsrichtung) zeigt, und
- Fig. 6: einen Ausschnitt aus Fig. 1 mit Anbauten des Wägesensors zeigt.

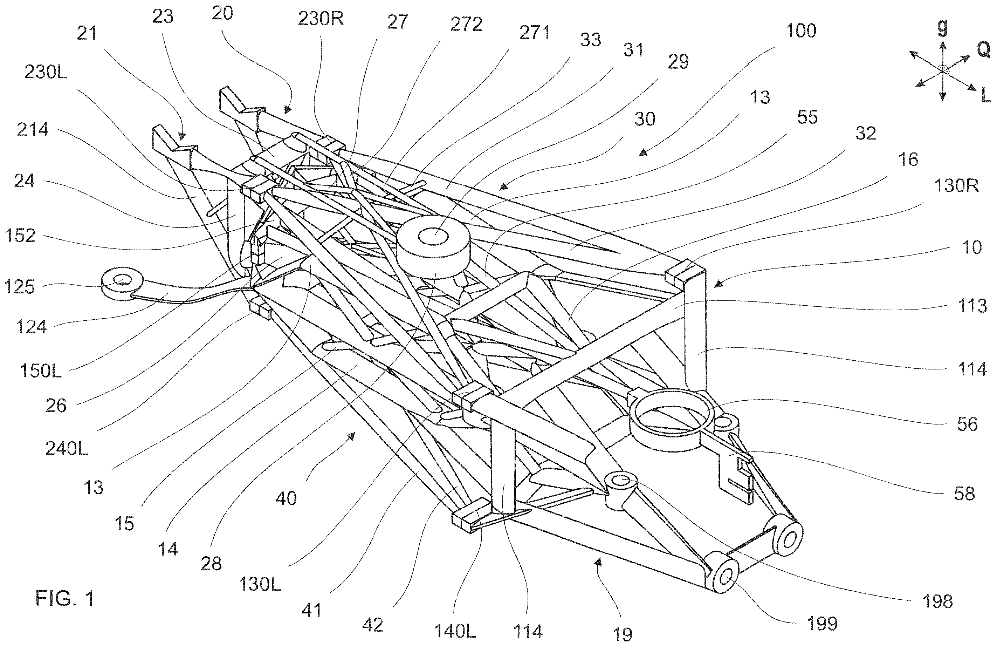

In der Perspektivansicht von Fig. 1 ist ein Strukturkörper 100 dargestellt, die Lastrichtung g ist in dieser Darstellung von oben nach unten, die Längsrichtung im Wesentlichen die Diagonale von links oben nach rechts unten, und die Querrichtung die andere Diagonale.

Der obere Lenker 30 des Roberval-Mechanismus des Strukturkörpers 100 ist nicht massiv, sondern aus mehreren miteinander verbundenen Streben aufgebaut. Zudem ist die Biegestelle zwischen oberem Lenker 30 und feststehendem Schenkel 10 in Querrichtung in die zwei separaten Querabschnitte 130R, 130L aufgespalten, wie auch die Biegestelle zwischen oberem Lenker 30 und beweglichem Schenkel 20. Jeweils eine Längsstrebe 31 des oberen Lenkers 30 verbinden die jeweils in Querrichtung Q einander zugeordneten Querabschnitte 130R, 230R, bzw. 130L, 230L der Biegestellen zwischen oberem Lenker 30 und feststehendem Schenkel 10 und beweglichem Schenkel 20. Diagonalstreben 32 verbinden jeweils die einander diagonal gegenüberliegenden Querabschnitte 130R, 230L bzw. 130L, 230R. Auf Höhe der Kreuzung der Diagonalstreben sind noch Querstreben 33 zwischen den Diagonalstreben 32 und den Längsstreben 31 angeordnet.

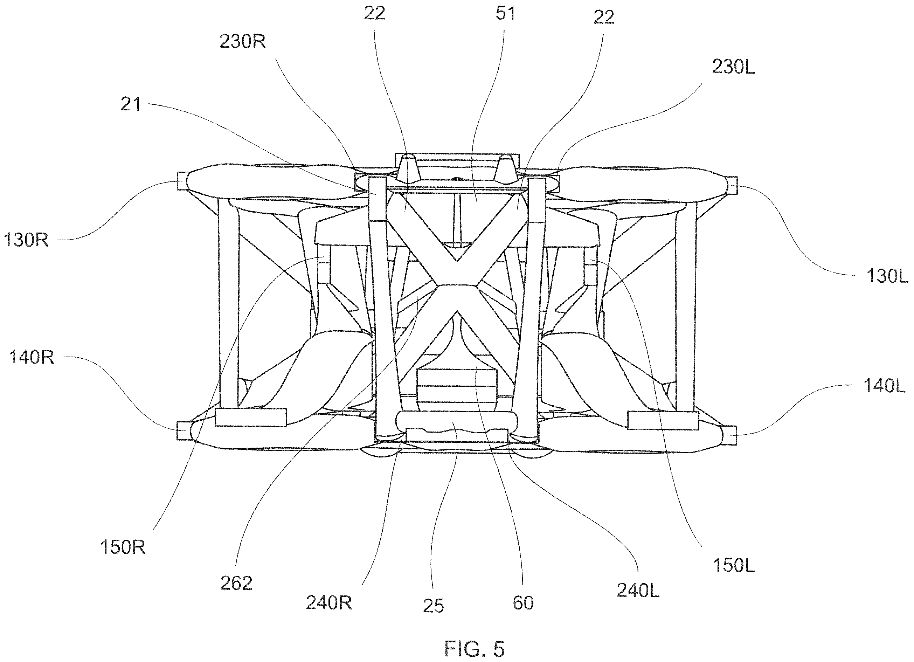

Durch Neigung gegenüber der Längsrichtung L verjüngt sich der obere Lenker 30 von der Seite des feststehenden Schenkels 10 zum beweglichen Schenkel 20 hin. Bei der bildlich dargestellten Ausführungsform ist die Querausdehnung der Biegestelle 230 um einen Faktor von ca. 2,75 geringer als die Querausdehnung der Biegestelle 130. Diese Verjüngung lässt sich in Fig. 5 nochmals gut erkennen, in welcher die Normale zur Papierebene die Blickrichtung in Längsrichtung vom beweglichen Schenkel 20 hin zum festen Schenkel 10 ist. Die Neigung der Längsstreben 31 zur Längsrichtung ist in diesem Ausführungsbeispiel ca. 18,5° .

Der untere Lenker 40 ist mit Längsstreben 41, Diagonalstreben 42 und Querstreben 43 vom gleichen Aufbau wie der obere Lenker 30, und verbindet zwischen den Biegestellen-Querabschnitten 140L, 140R zum feststehenden Schenkel 10 hin und 240L, 240R zum beweglichen Schenkel 20 hin.

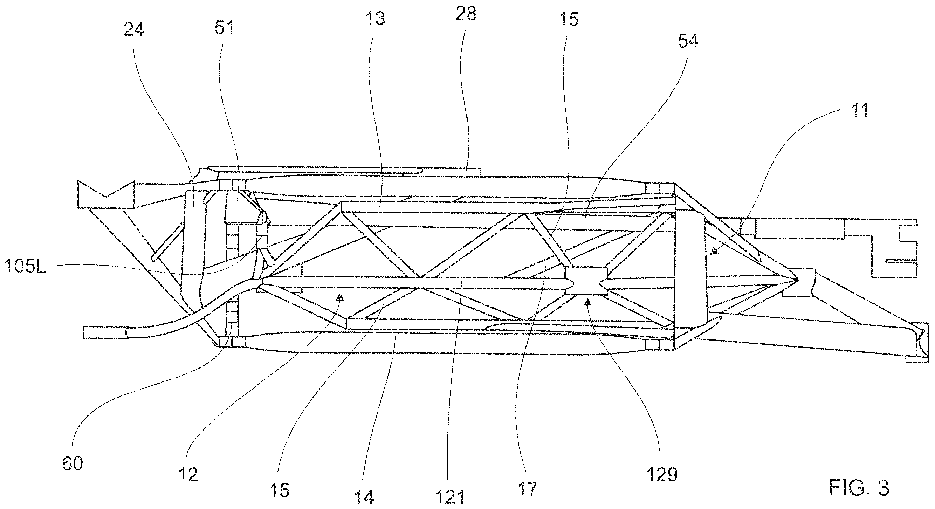

Der bewegliche Schenkel 20 weist einen im Wesentlichen in der aus Lastrichtung g und Querrichtung Q aufgespannten Ebene liegenden Trägerrahmen mit einer oberen Querstrebe 23, an dessen lateralen Enden sich Vertikalstreben 24 in Lastrichtung erstrecken, sowie mit zwei ein Stützkreuz bildende Diagonalstreben 22 (siehe Figur 5) auf. Zur Aufnahme der zu messenden Last ist ein mit einer Bohrung 29 versehener, in dem gezeigten Beispiel kreisscheibenförmiger Lastaufnehmer 28 vorgesehen, der über ein Gestänge 27 mit der Querstrebe 23 verbunden ist. Das Gestänge 27 weist in diesem Ausführungsbeispiel zwei an der Querstange 23 verankerte Längsstreben 271 auf, die untereinander durch zwei ein Stützkreuz bildende Diagonalstreben 272 verbunden sind. Bei dieser Ausführungsform liegen Lastaufnehmer 28 und Gestänge 27 oberhalb des oberen Lenkers 30. Zudem wird der Lastaufnehmer 28 von zwei massiveren Stützstreben 26 abgestützt, die an einem unteren Bereich der Vertikalstützen 24 festgelegt sind. Die Erstreckungsrichtung der Stützstreben 26 enthält Richtungskomponenten sowohl in Lastrichtung g, Längsrichtung L sowie Querrichtung Q und diese werden daher als Raumdiagonalstützen 26 bezeichnet. Wie aus Fig. 3 erkennbar ist, verlaufen die Raumdiagonalstützen 26 in Projektion auf die Ebene orthogonal zur Querrichtung (in Fig. 3 ist die Querrichtung die Normale zur Papierebene) unter einem Winkel von in dem bildlich gezeigten Beispiel etwa 23° zur Längsrichtung L. Auch die beiden Raumdiagonalstützen 26 sind durch ein Stützkreuz bildende Diagonalstreben 262 (siehe Figur 5) verbunden. Über die Raumdiagonalstützen 26 und das Gestänge 27 ist der Lastaufnehmer 28 starr mit dem Trägerrahmen 23, 24, 22 verbunden. Eine durch eine Raumdiagonalstütze 26, den Lastaufnehmer 28, eine Längsstrebe 271, die Querstrebe 23 und eine Vertikalstrebe definierte Öffnung wird von einer Diagonalstrebe 32 des oberen Lenkers 30 durchdrungen.

Die Lage der Biegestellen-Querabschnitte zum oberen Lenker 30 ist in dieser Ausführungsform etwa auf Höhe der Kreuzung der Vertikalstützen 24 und der Querstütze 23 des beweglichen Schenkels 20 angeordnet, die der Biegestellen-Querabschnitte zum unteren Lenker 40 über eine abgeknickte Verlängerung der Vertikalstütze 24, deren Enden durch eine weitere (untere) Querstange 25 verbunden sind. In der bildlich gezeigten Darstellung erscheinen die Biegestellen 130, 140, 230, 240 noch nicht als Dünnstellen, deren Ausbildung ausgehend von dem dargestellten Strukturkörper erfolgt noch in einem materialabnehmenden Bearbeitungsschritt.

In Querrichtung zentral ausgehend von der Querstrebe 25 verläuft die Verbindung zur Koppel 60, welche den beweglichen Schenkel 20 an den Hebel 50 der in dieser Ausführungsform aus nur einem Hebel bestehenden Hebelanordnung koppelt. Die Ausdehnung der Koppel 60 in Längsrichtung ist in Fig. 3 gut zu erkennen, in einer Richtung Q ist die Koppel 60 nochmals erheblich breitenreduziert, siehe Fig. 5.

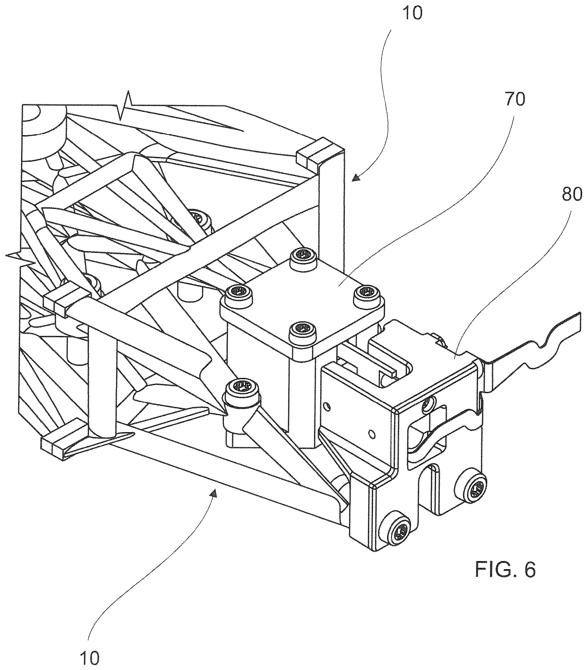

Der Hebel 50 ist als zweiarmiger Hebel ausgebildet, an dessen zum beweglichen Schenkel 20 gerichteten kurzen Arm 51 die Koppel 60 von unten ankoppelt, und mit einem langen Hebelarm 54, an dessen fernem Endbereich eine Ankopplung 56 für die elektromagnetische Kraftkompensation (Fig. 6) des Wägesensors vorgesehen ist. Das freie Ende 58 dient der Lagebestimmung für den Lagesensor (Fig. 6) wie im Stand der Technik üblich. Die Erfindung ist jedoch nicht auf Hebelanordnungen mit nur einem Hebel eingeschränkt. Es könnte auch ein Mehrfach-Hebelsystem gebildet sein, insbesondere mit zwei oder drei Hebeln, auch hierfür kommt die erfindungsgemäße Bauraumnutzung vorteilhaft zur Geltung.

Wie aus den Figuren 1 und 5 gut erkennbar ist, erfolgt die Lagerung des Hebels an dem feststehenden Schenkel 10 in Querrichtung gesehen aufgespalten an einer linken Lagerstelle 150L und einer rechten Lagerstelle 150R (das L und R für "Links" und "Rechts" orientiert sich an der Darstellung von Fig. 1 und ist somit nicht mit der Darstellung von Fig. 5 hinsichtlich der dortigen Links- und Rechts-Richtung stimmig). Wie besonders gut aus Fig. 3 zu erkennen ist, sind die Lagerstellen 150R, 150L sehr nahe an dem Stützrahmen 23, 24, 22, 25 angeordnet, von den Biegestellen 130, 140 zum feststehenden Schenkel 20 hin gemessen liegt die Lagerung 150 etwa auf Abstand von über 90% der Erstreckung der Lenker 30, 40 in Längsrichtung L.

Der kurze Hebelarm 51 des Hebels 50 weist eine sich zwischen der Lagerung 150L und 150R erstreckende Querversteifung 152 auf und ist im Wesentlichen daraus gebildet, die in diesem Ausführungsbeispiel in Projektion orthogonal zur Lastrichtung g im Wesentlichen dreieckförmig gebildet ist, wobei die Koppel 60 am freien Ende, etwa an der Dreiecksspitze mit überstumpfem Winkel, ankoppelt.

Der lange Hebelarm 54 besteht über einen Großteil seiner Längserstreckung aus zwei Längsstreben 55, die nahe der Ankopplung 56 zusammenlaufen und in Richtung auf die in Querrichtung separaten Lagerstellen 150L, 150R aufweiten und sich nahe dieser Lagerstellen nochmals auffächern. Das einstückig mit dem gesamten Hebel 50 gebildete freie Ende des langen Arms 54 erstreckt sich in Längsrichtung gesehen über die Biegestellen 130, 140 hinweg und durchdringt dabei einen vertikalen Trägerrahmen 11 des feststehenden Schenkels 10.

So weist der feststehende Schenkel 10 einen im Wesentlichen in der Ebene orthogonal zur Längsrichtung erstreckten Vertikalrahmen 11 und einen sich in Richtung zum beweglichen Schenkel 20 hin im Wesentlichen in einer Ebene orthogonal zur Lastrichtung erstreckenden Horizontalrahmen 12 auf (Fig. 3).

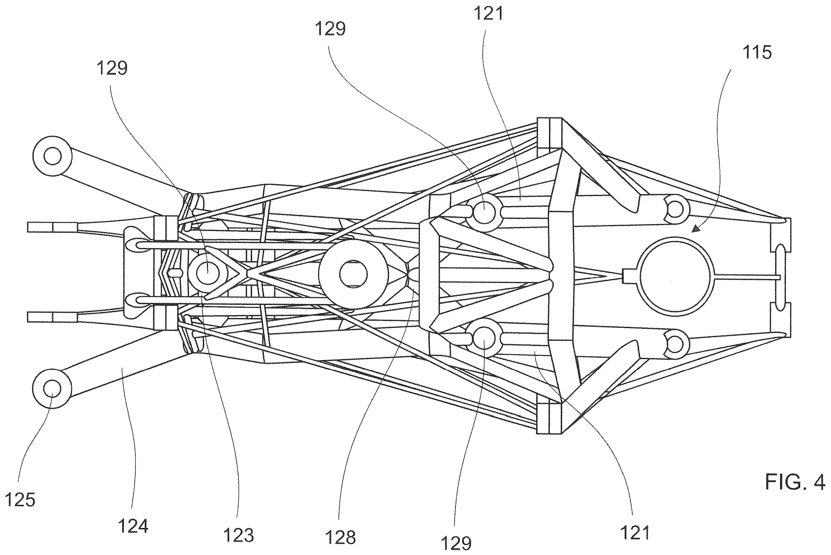

Der Vertikalrahmen hat zwei Querstreben 113 und zwei Vertikalstreben 114, nahe deren jeweiligen Verbindungen die Biegestellen 130, 140 angeordnet sind. Eine durch die obere Querstrebe 113 und die Diagonalstrebe 32 des oberen Lenkers 30 definierte Öffnung wird von den Raumdiagonalstützen 26 des beweglichen Schenkels 30 durchdrungen. Der Horizontalrahmen 12 weist, wie am besten aus einer Zusammenschau der Figuren 3 und 4 erkennbar ist, zwei im Wesentlichen parallel verlaufende Längsstreben 121 auf, nahe deren fernen Endbereich eine Querstrebe 123 vorgesehen ist. Jede dieser Streben 121, 121 und 123 ist in diesem Ausführungsbeispiel mit einer Montagebohrung 129 versehen, über die der Strukturkörper an der Wägevorrichtung befestigbar ist. Auf Höhe etwa der Montagebohrungen 129 setzt ein die Längsstreben 121 verbindendes Stützkreuz 128 an.

An Auslegern 124 des Horizontalrahmens sind Montagebohrungen 125 vorgesehen, über welche eine Anordnung zum Aufbringen eines Referenzgewichts befestigt werden kann. Das (nicht dargestellte) Referenzgewicht kann auf eine Auflage 21 abgelegt werden, welche über ein Gestänge 214 mit den Vertikalstützen 24 des beweglichen Schenkels 20 starr verbunden sind. In diesem Ausführungsbeispiel erfolgt somit die Weiterleitung sowohl der auf den Lastaufnehmer 28 eingeleiteten Last eines zu messenden Gewichts als auch die auf Auflage 21 eingeleitete Last eines Referenzgewichts über die gleiche Koppel 60 zwischen beweglichem Schenkel 20 und Hebel 50.

In Querrichtung Q gesehen beidseitig werden die Längsstreben 121 des Horizontalrahmens durch eine untere Längsstrebe 14 und eine obere Längsstrebe 13 flankiert, welche über bezüglich der Ebene orthogonal zur Querrichtung gesehen Diagonalstreben 15 mit der jeweiligen Längsstrebe 121 verbunden ist. Die Querstreben 13 sind untereinander und mit der Querstrebe 113 des Vertikalrahmens über weitere ein Stützdreieck 16 bildende Streben miteinander verbunden. Zudem verbindet eine diagonal verlaufende Strebe 17 die Querstrebe 113 mit dem Horizontalrahmen 12 über das Stützkreuz 128. Die Diagonalstütze 17 durchdringt dabei die durch die Längsstreben 55 und Querversteifung 152 des Hebels 50 definierte Öffnung, so dass sich der Hebel 50 und der feststehende Schenkel 10 wechselseitig durchdringen. Der Montagebereich mit der Montagebohrung 129 der Querstrebe 123 ist zudem noch über ein in Längs- und Querrichtung verlaufendes Stützkreuz mit dem Stützkreuz 128 und den Längsstreben 121 verbunden. Man erkennt, dass die Montagebereiche mehrfach durch Streben gestützt sind, wie auch die Lagerstellen 150R, 150L.

Die Längsstreben 13, 121 und 14 liegen somit wie insbesondere aus Fig. 4 gut zu erkennen ist, in Querrichtung gesehen bezüglich dem zentral angeordneten Hebel 50 weiter außen als der Hebel 50.

An der dem beweglichen Schenkel 20 abgewandten Seite des Vertikalrahmens 11 sind über ein Gestänge 19 noch Montagebohrungen 198 für die Magnet-Spule-Anordnung der elektromagnetischen Kraftkompensation 70 mit Magnet und Spule vorgesehen, wobei die Spule am Spulenhalter 56 befestigt wird, sowie Montagebohrungen 199 für den mit dem freien Ende 58 des Hebels 50 zusammenwirkenden Positionssensor 80. Dieser Montagezustand ist in dem Ausschnittsbereich von Fig. 6 bildlich dargestellt. Es versteht sich, dass entsprechende Montageankopplungen im Falle einer auf der anderen Seite des Vertikalrahmens 11 angeordneten Magnet-Spule-Anordnung dann an der dem beweglichen Schenkel 20 zugewandten Seite angeordnet wären.

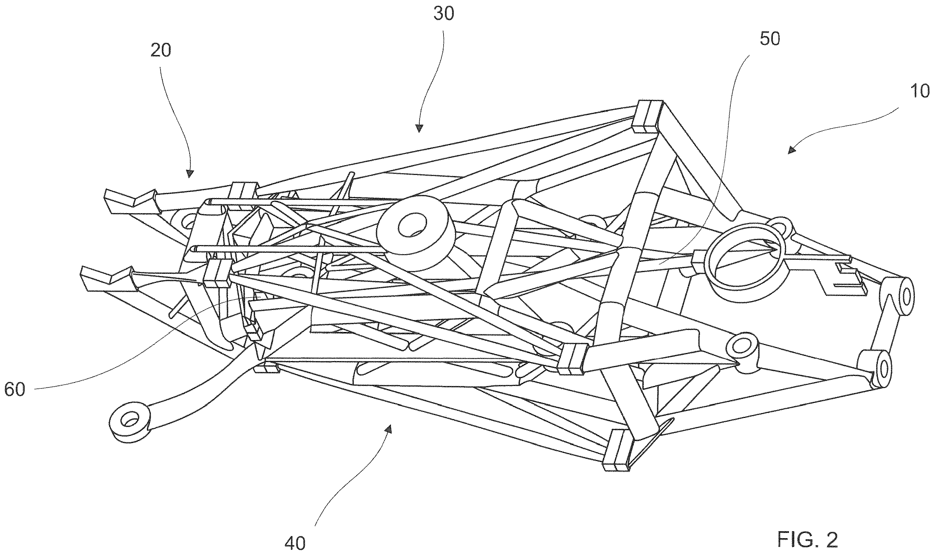

Alle in den Figuren 1 bis 5 dargestellten Bauteile 10, 20, 30, 40, 50 und 60 sind bei diesem Ausführungsbeispiel gemeinsam einheitlich einstückig im Wege des additiven Fertigungsverfahrens entstanden. Wie bereits erwähnt, kann in einer Gestaltungsweise vorgesehen sein, dass die endgültige Form der Dünnbiegestellen an den Biegestellen zwischen den Hebeln und den Schenkeln des Roberval-Mechanismus durch materialabnehmende Bearbeitung ausgehend von dem dort additiven gebildeten Materialbereich erzeugt werden. Alternativ ist in einer anderen Gestaltungsweise auch eine vollständig additive Fertigung vorgesehen. Als Material für den Strukturkörper 100 kommen Kunststoffmaterialien wie auch metallische Materialien in Betracht. Alle Teile können aus dem gleichen Material gefertigt sein, es wird jedoch auch an die Verwendung unterschiedlicher Materialien gedacht, etwa die Biegestellen aus einem anderen Material zu bilden als die übrigen Bereiche

Der Strukturkörper 100 ist durch ihre Gestaltung mit zahlreichen Längs-, Quer- und Vertikalstreben sowie auch Diagonalstreben mit einem bezogen auf die Gesamtausdehnung des Strukturkörpers vergleichsweise geringen Masse aber dennoch hoher Steifigkeit aufgebaut und erlauben durch das einander Durchdringen unterschiedlicher funktionaler Bestandteile eine erweiterte Nutzungsmöglichkeit lokaler Bauraumbereiche, die eine Positionierung von Bestandteilen der einzelnen funktionalen Teile variabler werden lässt und für die Steuerung des Flusses der Kraftwege günstige Gestaltungen erlaubt.

### Liste der Bezugszeichen

- 10: Feststehender Schenkel
- 11: Vertikalrahmen
- 12: Horizontalrahmen
- 13: Längsstrebe
- 14: Längsstrebe
- 15: Diagonalstrebe
- 16: Stützdreieck
- 17: Diagonalstrebe
- 19: Gestänge
- 20: Beweglicher Schenkel
- 21: Auflage Referenzgewicht
- 22: Diagonalstrebe
- 23: Querstrebe
- 24: Vertikalstrebe
- 25: Querstrebe
- 26: Raumdiagonalstütze
- 27: Gestänge
- 28: Lastaufnehmer
- 29: Bohrung
- 30: Oberer Lenker
- 31: Längsstrebe
- 32: Diagnonalstrebe
- 33: Querstrebe
- 40: Unterer Lenker
- 41: Längsstrebe
- 42: Diagonalstrebe
- 43: Querstrebe
- 50: Hebel
- 51: Kurzer Hebelarm
- 54: Langer Hebelarm
- 56: Spulenhalter
- 58: freies Hebelende
- 60: Koppel
- 70: elektromagnetische Kraftkompensation
- 80: Lagesensor
- 100: Strukturkörper für Wägesensor
- 113: Querstrebe
- 114: Vertikalstrebe
- 121: Längsstrebe
- 123: Querstrebe
- 124: Ausleger
- 125: Montagebohrung
- 128: Stützkreuz
- 129: Montagebohrung
- 130L, 130R: Biegestelle
- 140L, 140R: Biegestelle
- 150L, 150R: Lagerstelle
- 152: Querversteifung
- 198: Montagebohrung
- 199: Montagebohrung
- 214: Gestänge
- 230L, 230R: Biegestelle
- 240L, 240R: Biegestelle
- 262: Diagonalstrebe
- 271: Längsstrebe
- 272: Diagonalstrebe
- g: Lastrichtung
- L: Längsrichtung
- Q: Querrichtung

## Patentansprüche

1. Strukturkörper (100) eines Wägesensors mit Roberval-Mechanismus (10, 20, 30, 40), aufweisend
einen ersten Teil mit dem feststehenden Schenkel (10) des Roberval-Mechanismus,
einen zweiten Teil mit dem beweglichen Schenkel (20) des Roberval-Mechanismus,
einen dritten Teil mit dem oberen Lenker (30) des Roberval-Mechanismus,
einen vierten Teil mit dem unteren Lenker (40) des Roberval-Mechanismus,
einen fünften Teil mit einer den beweglichen Schenkel (20) mit einer der sensorischen Messung dienenden Ausgangsseite verbindenden Hebelanordnung (50), und
einen sechsten Teil mit einer den beweglichen Schenkel (20) an die Hebelanordnung (50) ankoppelnden Koppel (60), wobei
wenigstens eines von dem ersten bis fünften Teil einen Bereich von der Topologie eines Henkelkörpers von wenigstens Geschlecht Eins aufweist, dessen wenigstens ein Loch von wenigstens einem mit diesem Bereich einstückig verbundenen Abschnitt eines anderen von dem ersten bis sechsten Teil durchdrungen ist, ein die aufzunehmende Gewichtslast aufnehmender Kraftaufnehmer (28) des zweiten Teils in einem in Längsrichtung (L) gesehen zwischen den zu einer Seite dem beweglichen Schenkel (20) und zur anderen Seite dem feststehenden Schenkel (10) zugeordneten Biegestellen (230, 240; 130, 140) angeordnet ist,
**dadurch gekennzeichnet, dass** der Kraftaufnehmer (28) durch wenigstens zwei Streben (27; 26) des zweiten Teils mit unterschiedlicher Winkelanstellung zur Ebene orthogonal zur Lastrichtung (g) abgestützt ist, mit Streben (26) als Bestandteile eines solchen durchdringenden Abschnitts und eines solchen durchdrungenen Bereichs.

2. Strukturkörper nach Anspruch 1, bei dem das Geschlecht des Henkelkörpers des durchdrungenen Bereichs Zwei oder mehr ist, und wenigstens ein weiteres Loch von dem anderen Teil und/oder einem nochmals anderen mit dem durchdrungenen Bereich einstückig verbundenen Teil des ersten bis sechsten Teils wenigstens abschnittsweise durchdrungen ist.

3. Strukturkörper nach einem der vorherigen Ansprüche, bei dem neben dem einen Teil wenigstens ein weiteres Teil von dem ersten bis fünften Teil einen Bereich von der Topologie eines Henkelkörpers von wenigstens Geschlecht Eins aufweist, dessen wenigstens ein Loch von wenigstens einem einstückig mit diesem Bereich des weiteren Teils verbundenen anderen von dem ersten bis sechsten Teil durchdrungen ist.

4. Strukturkörper nach einem der vorhergehenden Ansprüche, bei dem die Hebelanordnung (50) einen Abschnitt (54) aufweist, der sich in Längsrichtung (L) des Strukturkörpers (100) gesehen in Richtung weg von dem beweglichen Schenkel (20) über die dem feststehenden Schenkel zugeordneten Biegestellen (130; 140) hinaus erstreckt und dabei in Querrichtung (Q) gesehen zwischen den in Querrichtung äußeren Enden (130L, 130R; 140L, 140R) dieser Biegestellen verläuft, insbesondere als durchdringender Abschnitt.

5. Strukturkörper nach einem der vorhergehenden Ansprüche, bei dem in Projektion auf eine Ebene orthogonal zur Querrichtung (Q) gesehen ein Bereich (54) der Hebelanordnung insbesondere mehrfach von Abschnitten des feststehenden Schenkels gekreuzt wird, insbesondere ein durchdrungener Bereich und/oder von einem durchdringenden Abschnitt.

6. Strukturkörper nach einem der vorhergehenden Ansprüche, bei dem in Projektion auf eine Ebene orthogonal zur Lastrichtung (g) gesehen ein in Längsrichtung (L) gesehen insbesondere überwiegender Abschnitt der Hebelanordnung (51, 54) zwischen Materialbereichen des ersten Teils liegt, insbesondere mit in dieser Ebene bemessenen Verhältnis aus Querausdehnung des Hebelanordnungsabschnitts zur Querausdehnung des ersten Teils von weniger als 0,9, bevorzugt weniger als 0,8, insbesondere weniger als 0,7 über einen Längsabschnitt von wenigstens 40%, bevorzugt wenigstens 60%, insbesondere wenigstens 80% der Längsausdehnung der Lenker (30, 40).

7. Strukturkörper nach einem der vorhergehenden Ansprüche, bei dem an dem beweglichen Schenkel eine Auflage für ein wägesensorinternes Referenzgewicht vorgesehen ist und insbesondere eine über den Kraftaufnehmer (28) eingeleitete Last wie auch eine über die Auflage für das Referenzgewicht eingeleitete Last über dieselbe Koppel (60) in die Hebelanordnung (50) eingeleitet wird und/oder am feststehenden Schenkel (10) eine Abstützung für eine das Referenzgewicht im Nichtgebrauch haltende Halteeinheit vorgesehen ist.

8. Strukturkörper nach einem der vorhergehenden Ansprüche, bei dem die Biegestellen (130, 140; 230, 240) zur Seite des feststehenden und/oder beweglichen Schenkels für den oberen (30) und/oder unteren (40) Lenker in Querrichtung (Q) gesehen voneinander beabstandete Querabschnitte (130L-130R; 140L-140R; 230L-230R; 240L-240R) aufweisen.

9. Strukturkörper nach einem der vorhergehenden Ansprüche, bei dem die konvexe Hülle der Biegestellenabschnitte (130L, R; 140L, R; 230L, R; 240L, R) bzw. in Querrichtung äußeren Enden der Biegestellen ein Volumen (v) umfasst, dessen Produkt mit der Dichte ( *ρ* ) des Materials des Strukturkörpers (100) um einen Faktor von wenigstens 1,2, bevorzugt wenigstens 1,4, insbesondere wenigstens 1,75 größer ist als die Masse (m) des in diesem Volumen befindlichen Materials des Strukturkörpers (100).

10. Strukturkörper nach einem der vorhergehenden Ansprüche, bei dem die maximale Ausdehnung des beweglichen Schenkels in Querrichtung um wenigstens einen Faktor 1,125, bevorzugt wenigstens 1,25, insbesondere wenigstens 1,5 geringer ist als die des feststehenden Schenkels.

11. Strukturkörper nach einem der vorhergehenden Ansprüche, bei dem mehrere, insbesondere alle vom ersten bis sechsten Teil einstückig miteinander verbunden sind, insbesondere durch Herstellung im additiven Verfahren.

12. Herstellung eines nach einem der vorhergehenden Ansprüche gestalteten Strukturkörpers im additiven Verfahren.

13. Herstellung nach Anspruch 12, bei dem im Anschluss an das additive Verfahren in einem materialabnehmenden Bearbeitungsschritt die Biegestellen des Roberval-Mechanismus nachbearbeitet werden und/oder wobei bei dem additiven Verfahren temporäre Verbindungsstreben geschaffen werden, die später wieder materialabnehmend entfernt werden, letzteres insbesondere nach dem Nachbearbeitungsschritt für die Biegestellen.

14. Wägesensor, insbesondere nach dem Prinzip der elektromagnetischen Kraftkompensation, mit einem nach einem der Ansprüche 1-11 ausgebildeten Strukturkörper.

15. Wägevorrichtung mit einem oder mehreren nach Anspruch 14 ausgebildeten Wägesensor(en).

## Claims

1. A structural body (100) of a scale sensor with Roberval mechanism (10, 20, 30, 40), comprising
a first part with the fixed leg (10) of the Roberval mechanism,
a second part with the movable leg (20) of the Roberval mechanism,
a third part with the upper link (30) of the Roberval mechanism,
a fourth part with the lower link (40) of the Roberval mechanism,
a fifth part with a lever arrangement (50) connecting the movable leg (20) to an output side serving for sensory measurement, and
a sixth part with a coupling (60) coupling the movable leg (20) to the lever arrangement (50), wherein
at least one of the first to fifth parts has a region of the topology of a handle body of at least gender one, the at least one hole of which is penetrated by at least one portion of another of the first to sixth parts that is integrally connected to this region, a force receiver (28) of the second part that receives the weight load to be received is arranged in a longitudinal direction (L) between the bending points (230, 240; 130, 140) assigned to the movable leg (20) on one side and to the fixed leg (10) on the other side,
**characterized in that** the force receiver (28) is supported by at least two struts (27; 26) of the second part with different angular positions relative to the plane orthogonal to the load direction (g), with struts (26) as components of such a penetrating portion and such a penetrated region.

2. The structural body according to claim 1, wherein the gender of the handle body of the penetrated region is two or more, and at least one further hole is penetrated at least in portions by the other part and/or a still other part of the first to sixth part integrally connected to the penetrated region.

3. The structural body according to any one of the preceding claims, in which, in addition to the one part, at least one further part of the first to fifth parts has a region with the topology of a handle body of at least gender one, the at least one hole of which is penetrated by at least one other of the first to sixth parts integrally connected to this region of the further part.

4. The structural body according to any one of the preceding claims, in which the lever arrangement (50) has a portion (54) which, viewed in the longitudinal direction (L) of the structural body (100), extends in the direction away from the movable leg (20) beyond the bending points (130; 140) assigned to the fixed leg and, viewed in the transverse direction (Q), runs between the transversely outer ends (130L, 130R; 140L, 140R) of these bending points, in particular as a penetrating portion.

5. The structural body according to any one of the preceding claims, in which, viewed in projection onto a plane orthogonal to the transverse direction (Q), a region (54) of the lever arrangement is intersected in particular several times by portions of the fixed leg, in particular a penetrated region and/or by a penetrating portion.

6. The structural body according to any one of the preceding claims, in which, viewed in projection onto a plane orthogonal to the load direction (g), a portion of the lever arrangement (51, 54) which is in particular predominant in the longitudinal direction (L) lies between material regions of the first part, in particular with a ratio of the transverse extent of the lever arrangement portion to the transverse extent of the first part of less than 0.9, preferably less than 0.8, in particular less than 0.7 over a longitudinal portion of at least 40%, preferably at least 60%, in particular at least 80% of the longitudinal extent of the links (30, 40).

7. The structural body according to any one of the preceding claims, in which a support for a reference weight internal to the scale sensor is provided on the movable leg and in particular a load introduced via the force receiver (28) as well as a load introduced via the support for the reference weight is introduced into the lever arrangement (50) via the same coupling (60) and/or a support for a holding unit holding the reference weight when not in use is provided on the fixed leg (10).

8. The structural body according to any one of the preceding claims, in which the bending points (130, 140; 230, 240) have transverse portions (130L-130R; 140L-140R; 230L-230R; 240L-240R) spaced apart from one another in the transverse direction (Q) on the side of the fixed and/or movable leg for the upper (30) and/or lower (40) link.

9. The structural body according to any one of the preceding claims, in which the convex envelope of the bending point portions (130L, R; 140L, R; 230L, R; 240L, R) or the outer ends of the bending points in the transverse direction comprises a volume (v) the product of which with the density (p) of the material of the structural body (100) is greater by a factor of at least 1.2, preferably at least 1.4, in particular at least 1.75, than the mass (m) of the material of the structural body (100) located in this volume.

10. The structural body according to any one of the preceding claims, in which the maximum extension of the movable leg in the transverse direction is smaller than that of the fixed leg by at least a factor of 1.125, preferably at least 1.25, in particular at least 1.5.

11. The structural body according to any one of the preceding claims, in which multiple, in particular all of the first to sixth parts are integrally connected to one another, in particular by production using an additive method.

12. Production of a structural body designed according to any one of the preceding claims using an additive method.

13. Production according to claim 12, in which, following the additive method, the bending points of the Roberval mechanism are reworked in a material-removing processing step and/or wherein temporary connecting struts are created in the additive method, which struts are later removed again in a material-removing manner, the latter in particular after the reworking step for the bending points.

14. A scale sensor, in particular operating according to the principle of electromagnetic force compensation, with a structural body designed according to any one of claims 1-11.

15. A scale device with one or more scale sensors designed according to claim 14.

## Revendications

1. Corps structural (100) d'un capteur de pesage à mécanisme Roberval (10, 20, 30, 40), comprenant
une première partie avec la jambe fixe (10) du mécanisme Roberval,
une deuxième partie avec la jambe mobile (20) du mécanisme Roberval,
une troisième partie avec la biellette supérieure (30) du mécanisme Roberval,
une quatrième partie avec la biellette inférieure (40) du mécanisme Roberval,
une cinquième partie avec un ensemble de levier (50) reliant la jambe mobile (20) à un côté de sortie servant à la mesure sensorielle, et
une sixième partie avec une bielle (60) reliant la jambe mobile (20) à l'ensemble de levier (50), dans lequel
au moins l'une des première à cinquième parties présente une zone de la topologie d'un corps de poignée d'au moins un genre, dont au moins un trou est traversé par au moins une section d'une autre des première à sixième parties qui est solidaire de cette zone, un transducteur de force (28) de la deuxième partie qui absorbe la charge de poids à absorber est disposé dans une direction longitudinale (L) entre les points de flexion (230, 240 ; 130, 140) attribués à la jambe mobile (20) d'un côté et à la jambe fixe (10) de l'autre côté,
**caractérisé en ce que** le transducteur de force (28) est supporté par au moins deux entretoises (27 ; 26) de la deuxième partie avec des positions angulaires différentes par rapport au plan orthogonal à la direction de charge (g), avec des entretoises (26) comme composants d'une telle section pénétrante et d'une telle région pénétrée.

2. Corps structural selon la revendication 1, dans lequel le genre du corps de poignée de la région pénétrée est de deux ou plus, et au moins un autre trou est pénétré au moins partiellement par l'autre partie et/ou une autre partie encore de la première à la sixième partie reliée d'un seul tenant à la région pénétrée.

3. Corps structural selon l'une des revendications précédentes, dans lequel, en plus de la première partie, au moins une autre partie des première à cinquième parties présente une région de la topologie d'un corps de poignée d'au moins un genre, dont au moins un trou est traversé par au moins une autre des première à sixième parties reliée d'un seul tenant à cette région de l'autre partie.

4. Corps structural selon l'une des revendications précédentes, dans lequel l'ensemble de levier (50) présente une section (54) qui, vue dans la direction longitudinale (L) du corps structural (100), s'étend dans la direction s'éloignant de la jambe mobile (20) au-delà des points de flexion (130 ; 140) associés à la jambe fixe et, vue dans la direction transversale (Q), s'étend entre les extrémités transversalement extérieures (130L, 130R ; 140L, 140R) de ces points de flexion, notamment sous la forme d'une section pénétrante.

5. Corps structural selon l'une des revendications précédentes, dans lequel, vue en projection sur un plan orthogonal à la direction transversale (Q), une zone (54) de l'ensemble de levier est traversée notamment plusieurs fois par des sections de la jambe fixe, notamment une zone pénétrée et/ou par une section pénétrante.

6. Corps structural selon l'une des revendications précédentes, dans lequel, vue en projection sur un plan orthogonal à la direction de charge (g), une section de l'ensemble de levier (51, 54) qui est notamment prédominante dans la direction longitudinale (L) se trouve entre des zones de matériau de la première partie, notamment avec un rapport de l'étendue transversale de la section de l'ensemble de levier à l'étendue transversale de la première partie inférieur à 0,9, de préférence inférieur à 0,8, notamment inférieur à 0,7 sur une section longitudinale d'au moins 40 %, de préférence d'au moins 60 %, notamment d'au moins 80 % de l'étendue longitudinale des biellettes (30, 40).

7. Corps structural selon l'une des revendications précédentes, dans lequel un support pour un poids de référence interne au capteur de pesage est prévu sur la jambe mobile et notamment une charge introduite via le capteur de force (28) ainsi qu'une charge introduite via le support pour le poids de référence sont introduites dans l'ensemble de levier (50) via la même bielle (60) et/ou un support pour une unité de maintien maintenant le poids de référence lorsqu'il n'est pas utilisé est prévu sur la jambe fixe (10).

8. Corps structural selon l'une des revendications précédentes, dans lequel les points de flexion (130, 140 ; 230, 240) présentent des sections transversales (130L-130R ; 140L-140R ; 230L-230R ; 240L-240R) espacées les unes des autres dans la direction transversale (Q) du côté de la jambe fixe et/ou mobile pour la biellette supérieure (30) et/ou inférieure (40).

9. Corps structural selon l'une des revendications précédentes, dans lequel l'enveloppe convexe des sections de points de flexion (130L, R ; 140L, R ; 230L, R ; 240L, R) ou les extrémités extérieures des points de flexion dans la direction transversale comprennent un volume (v) dont le produit avec la densité (p) du matériau du corps structural (100) est supérieur d'un facteur d'au moins 1,2, de préférence d'au moins 1,4, notamment d'au moins 1,75, à la masse (m) du matériau du corps structural (100) se trouvant dans ce volume.

10. Corps structural selon l'une des revendications précédentes, dans lequel l'extension maximale de la jambe mobile dans la direction transversale est inférieure à celle de la jambe fixe d'au moins un facteur 1,125, de préférence d'au moins 1,25, notamment d'au moins 1,5.

11. Corps structural selon l'une des revendications précédentes, dans lequel plusieurs, notamment toutes les première à sixième parties sont reliées entre elles d'un seul tenant, notamment par fabrication selon un procédé additif.

12. Fabrication d'un corps structural conçu selon l'une des revendications précédentes en utilisant un procédé additif.

13. Fabrication selon la revendication 12, dans laquelle, après le procédé additif, les points de flexion du mécanisme Roberval sont retravaillés dans une étape de traitement par enlèvement de matière et/ou dans laquelle des entretoises de liaison temporaires sont créées dans le procédé additif, lesquelles sont ensuite à nouveau retirées par enlèvement de matière, cette dernière étape étant notamment réalisée après l'étape de post-traitement des points de flexion.

14. Capteur de pesage, notamment selon le principe de compensation de force électromagnétique, avec un corps structural conçu selon l'une des revendications 1 à 11.

15. Dispositif de pesage avec un ou plusieurs capteurs de pesage conçus selon la revendication 14.
